# FASCICULE DE BREVET EUROPEEN

(11) **EP 2 096 093 B1**
(45) Date de publication et mention de la délivrance du brevet: **22.05.2013**
(21) Numéro de dépôt: 09153942.9
(22) Date de dépôt: 27.02.2009
(51) Int. Cl.: C05F 11/00, C05F 11/08, C05G 3/00

(54) **Matériau horticole biodégradable et d'intérêt agronomique**
Biologisch abbaubares Gartenbaumaterial von agronomischem Interesse
Biodegradable horticultural material with agronomic utility

(30) Priorité: 27.02.2008 FR 0801082
(43) Date de publication de la demande: 02.09.2009
(73) Titulaire: Université de Rennes 1, 35065 Rennes Cedex (FR)
(72) Inventeur: Sassi, Jean-François, 22620 Ploubazlanec (FR); Jegou, Loïc, 22120 Pommert (FR); Le Deit, Hervé, 22300 Lannion (FR); Marco, Yann, 29490 Guipavas (FR)
(74) Mandataire: Maillet, Alain

(56) Documents cités:
- DE-A1- 1 812 745
- FR-A- 2 689 723
- US-A- 3 940 257
- US-A1- 2005 178 722
- DATABASE WPI Week 197808 Thomson Scientific, London, GB; AN 1978-14757A XP002499282 & JP 53 002204 A (JUJO PAPER CO LTD) 11 janvier 1978 (1978-01-11)
- TANIA MENDO AGUILAR WOSNITZA ET AL: "Utilization of seaweed Ulva sp. in Paracas Bay (Peru): experimenting with compost" JOURNAL OF APPLIED PHYCOLOGY, KLUWER ACADEMIC PUBLISHERS, DO, vol. 18, no. 1, 9 mars 2006 (2006-03-09), pages 27-31, XP019398336 ISSN: 1573-5176
- DATABASE WPI Week 200382 Thomson Scientific, London, GB; AN 2003-881930 XP002534213 & JP 2003 146785 A (DONG JU ACE CORP) 21 mai 2003 (2003-05-21)

## Description

La présente invention se situe dans le domaine de la production végétale. La présente invention concerne un matériau horticole biodégradable et nutritif destiné à la fabrication d'un support de culture végétale. Plus particulièrement, l'invention concerne un tel matériau horticole biodégradable essentiellement composé d'algues. L'invention concerne également un support pour la culture végétale composé d'un tel matériau, en particulier un dispositif de conditionnement d'une culture végétale, par exemple un pot, ainsi qu'un procédé de fabrication d'un tel dispositif de conditionnement.

La culture des plantes à grande échelle, réalisée en champs, en parcelles, en pots ou en serres, nécessite que le support de la culture soit enrichi en substances nutritives telles que des minéraux indispensables à la croissance de la plante. L'enrichissement du support de culture est réalisé habituellement à l'aide d'engrais ou de matériaux tels que du fumier ou du lisier. Le coût des engrais est élevé et le fumier est parfois difficile à se procurer. En parallèle, les champs de culture sont souvent recouverts d'un paillage composé de paille ou de foin permettant de protéger le sol des gouttes d'eau, du soleil et du vent. L'inconvénient majeur d'un tel paillage est que la décomposition de la paille par les microorganismes du sol entraîne une consommation d'azote présent dans l'environnement des plantes au détriment de la nutrition de celles-ci. Il est également courant de réaliser ces paillages avec des bâches en matière plastique. Toutefois ces bâches ne sont habituellement ni biodégradables, ni esthétiques.

Par ailleurs, les plantes destinées à l'usage des particuliers, une fois cultivées en sol ou hors sol chez un producteur, sont mises en pots pour être commercialisées. Les pots de culture les plus couramment utilisés sont composés de matière plastique non biodégradable. De ce fait, la plante avec sa motte de terre doit être ôtée du pot avant d'être plantée en terre ou rempotée dans un pot de taille supérieure. La plantation ou le rempotage des plantes est souvent perçu comme fastidieux par le consommateur. En outre, le pot contenant initialement la plante est jeté par le consommateur. Il existe aujourd'hui des pots pour la culture de plantes réalisés à partir de matériaux biodégradables. L'intérêt de l'utilisation de tels matériaux est que la plante peut être mise en terre avec son pot puisque celui-ci est dégradé dans le temps, de façon naturelle. Parmi les matériaux utilisés pour la fabrication de ces pots biodégradables, se trouvent les fibres de cellulose, la tourbe, l'amidon ou leurs mélanges. Un des inconvénients majeurs de ces types de matériaux est qu'ils ne sont pas source de substances nutritives pour la plante. Au contraire, la dégradation d'un dispositif de conditionnement réalisé en ce type de matériau fait intervenir des microorganismes présents dans le sol dont l'activité nécessite une consommation d'azote. La plante se trouve alors privée d'une partie de l'azote présent dans son environnement.

US 2005/178722 A1 décrit un système et une méthode pour produire un additif pour améliorer les sols. Ledit système consiste en une succession de stations reliées entre elles consistant en un bassin contenant des algues à travers lequel de l'eau est filtrée, un appareil pour sécher les algues jusqu'à la teneur en eau désirée, un appareil pour mixer les algues avec du papier en lambeau et un moule dans lequel le mélange algue/papier est mis en forme. Lors du filtrage dans le bassin les algues absorbent les éléments nutritifs présents dans l'eau et grandissent jusqu'à un certain niveau. Lorsque le niveau désiré est atteint, les algues sont récoltées et séchées. Elles sont ensuite mélangées avec de la pâte à papier pour produire une pâte qui sera formée et utilisée par exemple comme amendement. L'additif ainsi obtenu peut être conditionné sous forme de pot ou il peut être également utilisé comme panneau de paillage.

JP 53 002204 A réfère à un matériau en plaque destiné à la culture comprenant des fibres végétales telles que de la pâte de bois, de l'écorce, de la paille de riz ou de la sciure et 5-50% en poids d'un agent gonflant tel que des algues. Le matériau se présente sous forme de feuilles.

Le but de la présente invention est de proposer un matériau destiné à la fabrication d'un support de culture végétale, qui présente un intérêt agronomique, par exemple en terme de nutrition, de stimulation de la croissance ou encore de renforcement des défenses de la plante contre des agressions et qui soit également biodégradable.

Un autre but de la présente invention est de proposer un matériau destiné à la fabrication d'un support de culture végétale, qui soit aisé à fabriquer pour un coût de fabrication peu élevé.

A cet effet, un matériau destiné à la fabrication d'un support de culture végétale, biodégradable et d'intérêt agronomique, selon l'invention, est caractérisé en ce qu'il est composé d'algues et d'une charge végétale choisie parmi les fibres lignocellulosiques ou un mélange composé essentiellement de fibres lignocellulosiques. Et qu'il est obtenu par un procédé selon la revendication 1.

Le matériau selon l'invention est ainsi entièrement biodégradable. Les fibres sont d'origine végétale et peuvent ainsi être dégradées de façon naturelle par des microorganismes. Les fibres lignocellulosiques sont une combinaison de lignine, d'hémicellulose et de cellulose formant la charpente structurale des parois cellulaires végétales. Dans le cadre de la présente invention, elles confèrent des propriétés de résistance mécanique au matériau, indispensables à la réalisation d'un support de culture végétale. Les algues entrant dans la composition du matériau sont à l'état broyé. Les algues utilisées n'ont subi aucun procédé de transformation dénaturant, tel qu'une transformation en une forme pulvérulente. Elles conservent ainsi toutes leurs qualités conférant, par exemple, des propriétés nutritives à celui-ci. En particulier, les algues sont une source de minéraux, tels que du potassium, du phosphore et de l'azote indispensables à la croissance des plantes. Les algues enrichissent également le matériau en sels et en hormones de croissance. Elles contiennent, de plus, des précurseurs de composés éliciteurs favorisant la germination, la croissance et le maintien de la santé de la plante.

lesdites algues sont du genre *Ulva*. Avantageusement , les algues sont choisies parmi le genre *Ulva armoricana*, *Ulva rotundata*, *Ulva rigida*, ou leurs mélanges.

Les algues vertes du genre *Ulva* prolifèrent le long des côtes, en particulier le long des côtes françaises bretonnes, selon un cycle régulier annuel débutant à la belle saison. Ce phénomène est bien connu sous la dénomination de "marée verte". La biomasse totale pour l'ensemble du littoral breton peut atteindre 50 000 tonnes en poids frais. Les algues occupant les plages sont collectées par les municipalités puis déposées dans des carrières désaffectées à cet effet. Il paraît alors indispensable de développer des techniques de valorisation de ces algues. Les demandeurs ont alors observé que ces algues pouvaient entrer dans la composition d'un matériau destiné à la réalisation d'un support de culture, sans perturber les propriétés mécaniques du support, et conférer au support des propriétés agronomiques intéressantes. Ces propriétés agronomiques sont intéressantes pour deux raisons. La première raison est que les algues apportent, comme mentionné précédemment, des éléments nutritifs indispensables au développement, à la croissance et à la protection des cultures végétales. La seconde raison est que les algues sont une source d'azote pour les microorganismes responsables de la dégradation du matériau. L'apport d'azote est alors suffisant à la fois pour les microorganismes et les cultures végétales.

Selon un mode de réalisation de l'invention, un mélange composé essentiellement de fibres lignocellulosiques est de la pâte à papier. Ce mode de réalisation est particulièrement avantageux puisque la source de fibres provient du recyclage classique du papier, selon des procédés connus de l'homme du métier.

Selon un autre mode de réalisation de l'invention, un mélange composé essentiellement de fibres lignocellulosiques est un mélange d'écorces de bois et de tourbe. Un tel mélange peut se trouver sous une forme de particules obtenue après broyage des composants.

La tourbe est une source de matière organique. La matière organique est indispensable au développement des cultures végétales car elle constitue une source pour la nutrition des plantes, par exemple une source de carbone, d'azote, de phosphore et de sels minéraux. Elle participe, en outre, à la rétention de l'eau.

Selon un mode de réalisation de l'invention, ledit matériau comprend un composé plastifiant et adhésif d'origine végétale. Un tel composé est avantageusement de l'amidon, un composé dérivé de l'amidon, de la fécule de pomme de terre ou un mélange. Un composé adhésif est un composé capable de conférer une adhésion entre les composants d'un matériau. Ce composé améliore notamment les propriétés de résistance mécanique à l'état humide. Ce composé participe également à la rétention et la répartition d'eau dans le matériau.

Selon un mode de réalisation de l'invention, ledit matériau comprend de l'huile de lin. L'huile de lin permet une bonne diffusion de l'eau, par exemple de l'eau provenant d'un arrosage, dans le support de culture végétale obtenu à partir du matériau selon l'invention.

Selon un mode de réalisation de l'invention, ledit matériau comprend entre 0,5 et 90 % d'algues du genre *Ulva*, préférentiellement entre 25 et 70 %, en poids.

Selon un autre mode de réalisation de l'invention, ledit matériau comprend entre 2 et 40 % du composé plastifiant et adhésif d'origine végétale, en poids.

La présente invention concerne encore un support de culture végétale caractérisé en ce qu'il est constitué d'un matériau biodégradable et d'intérêt agronomique tel que décrit précédemment. Un tel support de culture est moulé et peut prendre, selon un premier mode de réalisation, la forme d'un dispositif de conditionnement tel qu'un pot de culture. Ce mode de réalisation est particulièrement avantageux puisqu'il fournit un pot de culture pouvant être mis en terre avec la plante. En particulier, il permet de s'affranchir des matières plastiques non biodégradables constituant les pots dans lesquels sont proposées les plantes aux consommateurs.

Selon un autre mode de réalisation de l'invention, ledit support est un panneau de paillage. Un panneau de paillage composé d'un matériau selon l'invention permet un même niveau de protection des sols que les panneaux composés de paille, de foin ou de bâches en plastique, mais contrairement à ces derniers, il fournit aux cultures des éléments nutritifs et aux microorganismes du sol, de l'azote nécessaire à la dégradation du support.

Un autre but de la présente invention est de fournir un procédé de fabrication d'un matériau du type décrit précédemment.

Le procédé comporte une étape de mélange homogène d'algues broyées, d'eau et d'une charge végétale qui est choisie parmi les fibres lignocellulosiques ou un mélange composé essentiellement de fibres lignocellulosiques, et une ou plusieurs étapes d'élimination de l'eau contenue dans ledit mélange. Après élimination de l'eau, le matériau obtenu selon l'invention présente des propriétés de résistance mécanique.

Les algues incorporées dans le mélange ont été récoltées, séchées, dessablées puis broyées. Elles sont ensuite directement incorporées dans le procédé selon l'invention, sans subir de transformation dénaturante, comme évoqué précédemment. Lors du broyage, les algues ont libéré des composés, des molécules ou des substances d'intérêt qui sont alors incorporés dans le procédé de fabrication du matériau selon l'invention. Les algues peuvent alors être qualifiées d'algues actives.

Selon un mode de réalisation de l'invention, ladite étape de mélange comprend l'ajout d'un composé plastifiant et adhésif d'origine végétale choisi parmi l'amidon, un composé dérivé de l'amidon, la fécule de pomme de terre ou leurs mélanges.

Le procédé de fabrication selon l'invention comporte une étape de mélange ledit mélange de ladite étape de mélange comprend entre 1 et 8 % d'algues, entre 2 et 5 % d'une charge végétale choisie parmi les fibres lignocellulosiques ou un mélange composé essentiellement de fibres lignocellulosiques, entre 0 et 3 % d'un composé plastifiant et adhésif d'origine végétale et entre 90 et 95 % d'eau,
- une ou plusieurs étapes d'élimination de l'eau
- une étape de formation du support par moulage

Selon un mode de réalisation de l'invention, ladite étape d'élimination de l'eau est réalisée par séchage sous air maintenu à une température comprise entre 80 et 150 °C.

lesdites algues sont du genre *Ulva* et choisies préférentiellement parmi les espèces *Ulva armoricana*, *Ulva rotundata*, *Ulva rigida*, ou leur mélange.

Selon un autre mode de réalisation de l'invention, ledit procédé comporte, préalablement à l'étape d'élimination de l'eau, une étape de moulage dudit mélange autour d'un moule relié à un dispositif d'aspiration d'eau et, postérieurement à ladite étape d'élimination de l'eau, une étape de démoulage dudit matériau.

Un moule pourra, par exemple, prendre la forme d'un dispositif de conditionnement tel qu'un pot de culture ou encore la forme d'un panneau de manière à obtenir un panneau de paillage. Ainsi, le moule utilisé dans le procédé selon l'invention prendra la forme du support de culture que l'on désire obtenir. Le mélange, au cours du procédé selon l'invention, vient se mouler contre les parois du moule.

Selon ce même mode de réalisation de l'invention, ladite étape d'élimination de l'eau consiste d'une part, à égoutter ledit moule autour duquel est moulé ledit mélange tout en aspirant l'eau contenue dans ledit moule par ledit dispositif d'aspiration d'eau et, d'autre part, soit à sécher ledit mélange sous air maintenu à une température comprise entre 80 et 150 °C soit à disposer ledit moule dans un contre-moule maintenu à une température entre 80 et 150°C.

Les caractéristiques de l'invention mentionnées ci-dessus, ainsi que d'autres, apparaîtront plus clairement à la lecture de la description suivante d'exemples de réalisation qui se veulent illustratifs et non limitatifs.

### Exemple 1:

Un mélange composé de 3 % d'algues du genre *Ulva* (A), 2 % d'un mélange composé de 80 % d'écorces de bois et de 20 % de tourbe (B), 2 % de fécule de pomme de terre (C) et 93 % d'eau (D), en poids par rapport au poids total du mélange, est réalisé dans un récipient.

Le mélange (B) composé d'écorces de bois et de tourbe se présente sous la forme de particules obtenues après broyage des composants.

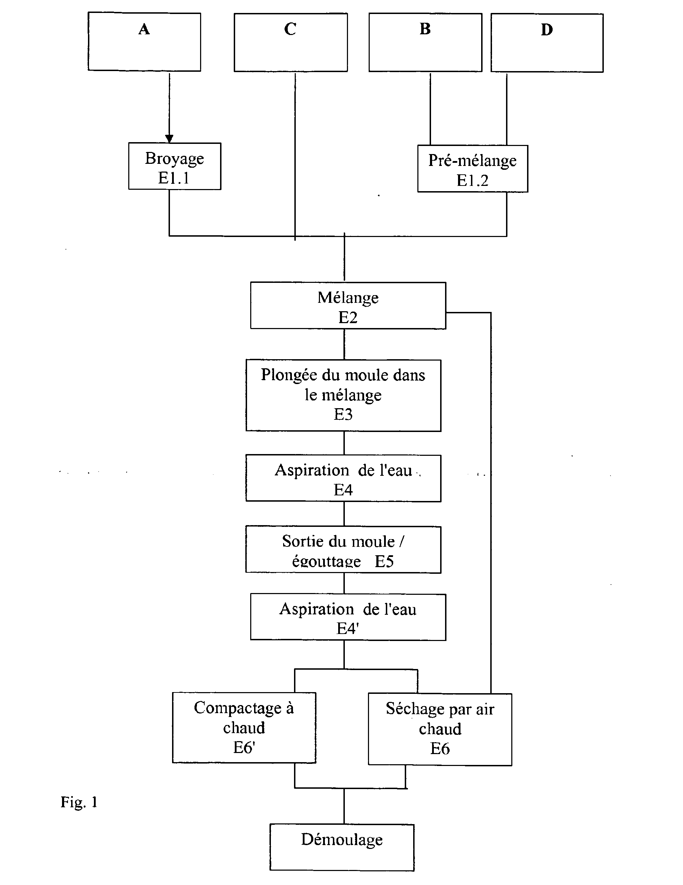

Le procédé de fabrication du matériau est résumé sur la Fig. 1.

Les algues du genre *Ulva* (A) sont préalablement récoltées, rincées à l'eau puis broyées pendant 20 minutes de manière à se présenter sous la forme de fragments de 1 à 2 mm² (étape E1.1). Le broyat est directement incorporé dans le mélange.

Le mélange composé d'écorces de bois et de tourbe (B) est préalablement mélangé avec l'eau (D) sous agitation pendant 48 heures, par exemple à l'aide d'un malaxeur (étape E1.2). Les autres composants, c'est-à-dire les algues du genre *Ulva* broyées (A) et la fécule de pomme de terre (C), sont ensuite ajoutés en maintenant l'agitation de manière à ce que la fécule de pomme de terre soit maintenue en suspension dans le mélange et que le mélange soit homogène (étape E2).

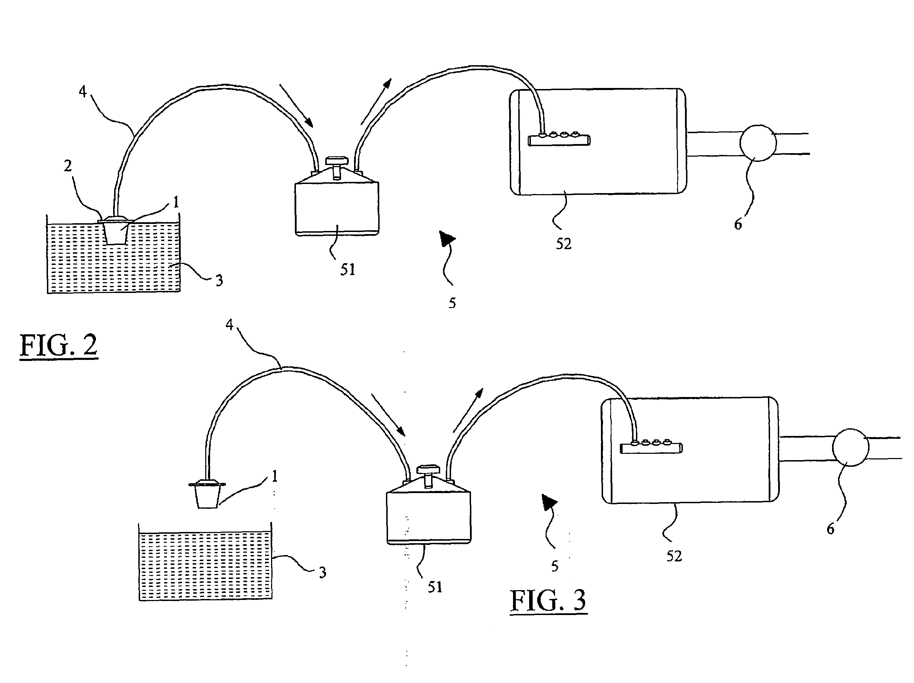

Un moule 1, présentant dans ce mode de réalisation la forme d'un godet de culture d'environ 10 cm de hauteur et 10 cm de diamètre, percé de trous à différents endroits et obturé par une structure grillagée 2 est plongé dans un récipient 3 contenant le mélange (Etape E3; Fig. 2). La structure grillagée 2 comporte une ouverture sur laquelle est fixé un tuyau 4 relié à un dispositif d'aspiration 5, composé d'un séparateur 51 relié à un réservoir tampon 52 dans lequel un vide est créé. Le dispositif d'aspiration 5 est relié à une pompe 6. L'aspiration est démarrée (étape E4). L'aspiration permet d'entraîner le mélange contre le moule 1. Le moule 1, contre lequel est aggloméré le mélange, est ensuite surélevé au-dessus du récipient 3 de manière à ce que de l'eau du mélange s'égoutte (Fig. 3; Fig. 1, étape E5). L'aspiration est maintenue pendant 1 à 5 minutes (étape E4'). L'égouttage E5 et l'aspiration E4, E4' participent à l'élimination d'une partie de l'eau. Puis le mélange est séché dans son moule qui est placé dans un four à air chaud dont la température est maintenue à 150° C pendant 2 heures (étape E6). Cette étape de séchage E6 contribue également à l'élimination de l'eau du mélange. Enfin, le matériau contenu dans le moule est démoulé (étape E7).

On obtient ainsi un godet de culture composé d'un matériau biodégradable et d'intérêt agronomique comprenant 41 % d'algues du genre *Ulva*, 27 % de fibres lignocellulosiques et 32% de fécule de pomme de terre.

5 godets ont ainsi été réalisés selon un procédé identique.

### Exemple 2:

Les mêmes étapes du procédé décrit en exemple 1 sont réalisées à partir d'un mélange composé, en poids par rapport au poids total du mélange, de 3 % d'algues du genre *Ulva* (A), 2 % de pâte à papier (B), 2 % de fécule de pomme de terre (C) et 93 % d'eau (D).

La pâte à papier (B) est la pâte obtenue au cours du recyclage industriel du papier.

On obtient ainsi un godet de culture composé d'un matériau biodégradable et d'intérêt agronomique comprenant 41 % d'algues du genre *Ulva*, 27 % de fibres lignocellulosiques et 32% de fécule de pomme de terre.

5 godets ont ainsi été réalisés selon un procédé identique.

### Exemple comparatif 3:

5 godets de culture, composés d'un matériau constitué d'un mélange compressé composé de 50 % de tourbe et de 50 % cellulose et disponibles dans le commerce, sont utilisés comme exemple comparatif 3.

### Exemple comparatif 4:

5 godets de culture composés d'un matériau constitué d'un mélange compressé composé de 80 % d'écorces de bois et de 20 % de tourbe et disponibles dans le commerce sont utilisés comme exemple comparatif 4.

### Exemple 6:

Les mêmes étapes du procédé décrit en exemple 1 sont réalisées à partir d'un mélange également identique à celui de l'exemple 1 jusqu'à l'étape d'aspiration de l'eau (étape E4'). Dans cet exemple, l'étape d'élimination de l'eau comprend une étape de compactage à chaud dans un contre-moule (étape E6'). A cet effet, le moule autour duquel est aggloméré le matériau, une fois égoutté, est placé dans un contre-moule pendant 30 minutes, lequel est maintenu à une température de 150° C pendant 2 heures.

Le contenu du moule est ensuite démoulé.

On obtient ainsi un godet de culture composé d'un matériau biodégradable et d'intérêt agronomique comprenant 41 % d'algues du genre *Ulva*, 27 % de fibres lignocellulosiques et 32% de fécule de pomme de terre.

2 godets ont ainsi été réalisés selon un procédé identique.

### Exemple 7:

Les mêmes étapes du procédé décrit en exemple 6 sont réalisées à partir d'un mélange identique au mélange de l'exemple 2.

On obtient ainsi un godet de culture composé d'un matériau biodégradable et d'intérêt agronomique comprenant 41 % d'algues du genre *Ulva*, 27 % de fibres lignocellulosiques et 32% de fécule de pomme de terre.

2 godets ont ainsi été réalisés selon un procédé identique.

### Analyses qualitatives du Support composé d'un matériau selon l'invention:

Des graines de tournesol ont été incubées dans de l'eau à 30°C pendant 48h. Les graines ont ensuite été semées dans les godets des exemples 1 à 4 et les godets ont été placés en serre pendant la durée de l'observation.

### Observations du système racinaire:

Au bout de 30 jours, les racines des plantes issues de la germination des graines sont visibles et ont traversé les godets sauf en ce qui concerne l'exemple comparatif 3. Les racines présentent une couleur blanche caractéristique d'un bon développement.

### Test de biodégradabilité:

Deux fragments de chaque godet se présentant sous la forme de bandes de 50 mm de longueur, 20 mm de largeur et 2 mm d'épaisseur ont été enfouis sous environ 15 mm de terre, en sol, pendant 4 semaines. La terre a été arrosée deux fois par semaine. Un exemple comparatif 5 supplémentaire a été utilisé au cours de ce test et correspond à un fragment obtenu à partir d'un godet de culture en matière plastique disponible dans le commerce.

Au bout de 4 semaines, on constate que la dégradation des godets composés d'un matériau contenant des algues (exemples 1, 2, 6 et 7) est supérieure à celle des godets composés d'un matériau comprenant uniquement des fibres de cellulose et de la tourbe (exemples comparatifs 3, 4). Comme attendu, aucune dégradation du fragment de matière plastique n'est observée (exemple comparatif 5). Ces résultats confirment que les algues contribuent efficacement à la dégradation du matériau en terre. Cette contribution s'explique en particulier par leur apport en azote aux microorganismes du sol, responsables de la dégradation.

### Analyse quantitative

Des analyses de la composition en minéraux, en sel, en matière organique et en éléments nutritifs des matériaux entrant dans la composition des godets de culture des exemples 1 à 7 ont été réalisées et sont regroupées dans les Tableaux 2 et 3. Les valeurs sont exprimées en pourcentage en poids de matière sèche (MS) et correspondent à des moyennes des valeurs obtenues pour les échantillons des godets de chaque exemple.

Des échantillons ont été prélevés sur chaque godet de culture. Une moyenne de la masse des échantillons pour chaque exemple est donnée dans le Tableau 1. Les échantillons sont placés dans une étuve dont la température est maintenue à 103°C pendant 20 heures. Les échantillons sont ensuite pesés de manière à déterminer une moyenne de la masse de matière sèche pour chaque exemple. Les échantillons sont ensuite calcinés dans une étuve dont la température est maintenue à 550°C pendant 12 heures. Les échantillons sont ensuite pesés de manière à déterminer une moyenne de la masse de matière minérale pour chaque exemple, la matière organique ayant été éliminée par calcination. La masse de celle-ci est déterminée en retranchant la masse minérale des échantillons de la masse de matière sèche.

**Tableau 1**

| Masse moyenne (g) | Exemple 1 | Exemple 2 | Exemple 3 | Exemple 4 | Exemple 6 | Exemple 7 | Ulves |
|---|---|---|---|---|---|---|---|
| Echantillon | 1,0003 | 1,0001 | 0,9997 | 0,9998 | 1,0005 | 0,9999 | 1,0004 |
| Matière sèche | 0,9469 | 0,9490 | 0,9458 | 0,9517 | 0,9325 | 0,9413 | 0,9373 |
| Matière minérale | 9,99 | 18,36 | 3,09 | 4,10 | 6,02 | 12,09 | 38,15 |
| Matière organique | 90,1 | 81,64 | 96,91 | 95,90 | 93,98 | 87,91 | 61,85 |

**Tableau 2**

| % en poids (MS) | Exemple 1 | Exemple 2 | Exemple 3 | Exemple 4 | Exemple 6 | Exemple 7 | Ulves |
|---|---|---|---|---|---|---|---|
| Azote | 0,78 | 0,59 | 0,43 | 0,37 | 1,02 | 1,02 | 3,32 |
| pH | 7,58 | 8,1 | 5,94 | 5,4 | 6,82 | 7,7 | 6,81 |
| P (eq. P₂O₅) | 0,15 | 0,14 | 0,02 | - | 0,13 | 0,17 | 0,44 |
| K (eq. K₂O) | 0,14 | 0,14 | 0,05 | - | 0,26 | 0,26 | 3,52 |
| Ca (eq. CaO) | 4,24 | 5,51 | 1,30 | - | 0,71 | 2,57 | 4,73 |
| Mg (éq.MgO) | 0,60 | 0,54 | 0,05 | - | 0,80 | 0,85 | 1,48 |
| S (éq. SO₃) | 0,70 | 1,40 | < 0,50 | - | 1,7 | 2,1 | 13,2 |

| | | | | | | | |
|---|---|---|---|---|---|---|---|
| (-) non dosé | | | | | | | |

**Tableau 3:**

| Poids (mg/Kg MS) | Exemple 1 | Exemple 2 | Exemple 3 | Ulves |
|---|---|---|---|---|
| Cu | 21,90 | 28,70 | 20,03 | 6,00 |
| Zn | 19,90 | 22,80 | 18,60 | 14,60 |
| As | <3 | <3 | <3 | <3 |
| Cd | 0,16 | 0,09 | 0,16 | <0,06 |
| Cr | 45,41 | 57,89 | 5,71 | 51,20 |
| Hg | 0,008 | 0,015 | 0,011 | 0,015 |
| Ni | 24,50 | 28,53 | 5,60 | 26,90 |
| Pb | 5,07 | 4,42 | 1,90 | 1,60 |

Les matériaux composant les godets des exemples 1, 2, 6 et 7, comprenant des algues, sont plus riches en minéraux que les matériaux composant les godets des exemples 3 et 4. Le procédé de fabrication des godets de culture permet de conserver une partie des minéraux des ulves. Lorsque les ulves sont mélangées aux autres composants lors de la phase de mélange du procédé de fabrication du matériau, en particulier à l'eau, elles libèrent des minéraux et de l'azote. Une partie des minéraux et de l'azote est éliminée au cours de la phase d'élimination de l'eau lors du procédé de fabrication du matériau. L'étape d'élimination de l'eau du matériau influence la teneur en minéraux du matériau. En effet, les matériaux des exemples 6 et 7 qui ont été disposés dans un moule compacté dans un contre-moule sont moins riches en minéraux que les matériaux des exemples 1 et 2. De même, les matériaux composant les godets des exemples 1, 2, 6 et 7 qui comprennent des algues sont plus riches en azote que les matériaux composant les godets des exemples 3 et 4. Par contre, les matériaux composant les godets des exemples 6 et 7 montrent un taux d'azote supérieur à celui obtenu pour les exemples 1 et 2. L'étape de compactage est ainsi favorable au maintien de l'azote dans le matériau. Les minéraux éliminés au cours de l'étape de compactage ne contiennent pas d'azote.

Les matériaux selon l'invention (exemples 1 et 2) sont plus riches en éléments fertilisants majeurs (N, P, K), en éléments fertilisants secondaires (Ca, Mg, S) et en oligoéléments (Cu, Zn) que les matériaux n'en contenant pas (exemples comparatifs 3 et 4). Ils sont ainsi plus favorables à la croissance d'une culture végétale.

On remarque également que les teneurs en éléments indésirables tels que l'arsenic As, le cadmium Cd, le chrome Cr, le plomb Pb, le nickel Ni et le mercure Hg sont conformes aux normes officielles.

Il est également possible, comme l'illustre la Fig. 1, de réaliser un matériau non moulé. Dans ce mode de réalisation particulier, l'étape d'élimination de l'eau ne Comprend que l'étape de séchage par air chaud (étape E6).

## Revendications

1. Procédé de fabrication d'un support de culture végétale, **caractérisé en ce qu'**il comporte:
- une étape de mélange (E2) homogène d'algues, d'eau et d'une charge végétale choisie, ledit mélange comprenant entre 1 et 8 % d'algues du genre *Ulva* préalablement broyées (E1.1), entre 2 et 5 % d'une charge végétale choisie parmi les fibres lignocellulosiques ou un mélange composé essentiellement de fibres lignocellulosiques, entre 0 et 3 % d'un composé plastifiant et adhésif d'origine végétale et entre 90 et 95 % d'eau,
- une ou plusieurs étapes d'élimination de l'eau contenue dans ledit mélange (E4, E4', E5, E6, E6').
- une étape de formation dudit support de culture végétale par moulage du mélange.

2. Procédé de fabrication selon la revendication 2, **caractérisé en ce que** ladite étape de mélange (E2) comprend l'ajout d'un composé plastifiant et adhésif d'origine végétale choisi parmi l'amidon, un composé dérivé de l'amidon, la fécule de pomme de terre ou leurs mélanges.

3. Procédé de fabrication selon l'une des revendications 1 à 2, **caractérisé en ce que** lesdites algues du genre *Ulva* sont choisies parmi les espèces *Ulva armoricana, Ulva rotundata, Ulva rigida,* ou leur mélange.

4. Procédé de fabrication selon l'une des revendications 1 à 3, **caractérisé en ce que** ledit mélange composé essentiellement de fibres lignocellulosiques est de la pâte à papier ou un mélange d'écorces de bois et de tourbe.

5. Procédé de fabrication selon l'une des revendications 1 à 4, **caractérisé en ce que** ledit composé plastifiant et adhésif d'origine végétale choisi parmi l'amidon, les dérivés d'amidon, la fécule de pomme de terre ou leur mélange.

6. Procédé de fabrication selon l'une des revendications 1 à 5, **caractérisé en ce que** ladite étape de mélange (E2) comprend l'ajout d'huile de lin.

7. Procédé de fabrication selon l'une des revendications 1 à 6, **caractérisé en ce que** ladite étape d'élimination de l'eau est réalisée par séchage sous air maintenu à une température comprise entre 80 et 150 °C (E6).

8. Procédé de fabrication selon l'une des revendications 1 à 7, **caractérisé en ce qu'**il comporte, préalablement à l'étape d'élimination de l'eau, une étape de moulage (E3) dudit mélange autour d'un moule relié à un dispositif d'aspiration et, postérieurement à ladite étape d'élimination de l'eau, une étape de démoulage dudit matériau (E7).

9. Procédé de fabrication d'un matériau biodégradable et d'intérêt agronomique selon la revendication 8, **caractérisé en ce que** ladite étape d'élimination de l'eau consiste d'une part, à égoutter ledit moule autour duquel est moulé ledit mélange (E5) tout en aspirant l'eau contenue dans ledit moule par ledit dispositif d'aspiration d'eau (E4') et, d'autre part, soit à sécher ledit mélange sous air maintenu à une température comprise entre 80 et 150 °C (E6) soit à disposer ledit moule dans un contre-femelle maintenu à une température entre 80 et 150 °C (E6').

10. Support de culture végétale obtenu par un procédé selon l'une des revendications 1 à 9.

11. Support de culture végétale selon la revendication 10, **caractérisé en ce qu'**il se présente sous la forme d'un dispositif de conditionnement, tel qu'un pot.

12. Support de culture végétale selon la revendication 10, **caractérisé en ce qu'**il se présente sous la forme d'un panneau de paillage.

## Patentansprüche

1. Verfahren zur Herstellung eines Pflanzenzuchtträgers, **dadurch gekennzeichnet, dass** es aufweist:
- einen Schritt (E2) des homogenen Mischens von Algen, Wasser und eines gewählten pflanzlichen Füllstoffs, wobei die Mischung zwischen 1 und 8 % von vorher zerquetschten Algen der Gattung *Ulva* (E1.1), zwischen 2 und 5 % eines pflanzlichen Füllstoffs, ausgewählt unter den ligno-cellulosehaltigen Fasern oder einer Mischung, die hauptsächlich aus ligno-cellulosehaltigen Fasern zusammengesetzt ist, zwischen 0 und 3 % einer Weichmacher- und Haftverbindung pflanzlichen Ursprungs und zwischen 90 und 95 % Wasser enthält,
- einen oder mehrere Schritte des Entfernens des in der Mischung enthaltenen Wassers(E4, E4, E5, E6, E6'),
- einen Schritt der Bildung des Pflanzenzuchtträgers durch Formen der Mischung.

2. Herstellungsverfahren nach Anspruch 1, **dadurch gekennzeichnet, dass** der Mischungsschritt (E2) das Hinzufügen einer Weichmacher- und Haftverbindung pflanzlichen Ursprungs enthält, die aus Stärke, einer von der Stärke abgeleiteten Verbindung, Kartoffelmehl oder ihren Mischungen ausgewählt wird.

3. Herstellungsverfahren nach einem der Ansprüche 1 bis 2, **dadurch gekennzeichnet, dass** die Algen der Gattung *Ulva* aus den Arten *Ulva armoricana, Ulva rotundata, Ulva rigida,* oder ihrer Mischung ausgewählt werden.

4. Herstellungsverfahren nach einem der Ansprüche 1 bis 3, **dadurch gekennzeichnet, dass** die hauptsächlich aus ligno-cellulosehaltigen Fasern zusammengesetzte Verbindung Papiermasse oder eine Mischung aus Baumrinden und Torf ist.

5. Herstellungsverfahren nach einem der Ansprüche 1 bis 4, **dadurch gekennzeichnet, dass** die Weichmacher- und Haftverbindung aus Stärke, Stärkederivaten, Kartoffelmehl oder ihrer Mischung ausgewählt wird.

6. Herstellungsverfahren nach einem der Ansprüche 1 bis 5, **dadurch gekennzeichnet, dass** der Mischungsschritt (E2) das Hinzufügen von Leinöl enthält.

7. Herstellungsverfahren nach einem der Ansprüche 1 bis 6, **dadurch gekennzeichnet, dass** der Schritt des Entfernens des Wassers durch Trocknung an der Luft durchgeführt wird, die auf einer Temperatur zwischen 80 und 150°C gehalten wird (E6).

8. Herstellungsverfahren nach einem der Ansprüche 1 bis 7, **dadurch gekennzeichnet, dass** es vor dem Schritt des Entfernens des Wassers einen Schritt des Formens (E3) der Mischung um eine Form herum, die mit einer Ansaugvorrichtung verbunden ist, und nach dem Schritt des Entfernens des Wassers einen Schritt des Entformens des Materials (E7) enthält.

9. Verfahren zur Herstellung eines biologisch abbaubaren und agronomisch vorteilhaften Materials nach Anspruch 8, **dadurch gekennzeichnet, dass** der Schritt des Entfernens des Wassers einerseits darin besteht, die Form, um die herum die Mischung geformt wird (E5), abtropfen zu lassen und dabei das in der Form enthaltene Wasser durch die Wasseransaugvorrichtung (E4') anzusaugen, und andererseits darin besteht, die Mischung an Luft zu trocknen, die auf einer Temperatur zwischen 80 und 150°C gehalten wird (E6), oder die Form in einer Gegenform anzuordnen, die auf einer Temperatur zwischen 80 und 150°C gehalten wird (E6').

10. Pflanzenzuchtträger, der durch ein Verfahren nach einem der Ansprüche 1 bis 9 erhalten wird.

11. Pflanzenzuchtträger nach Anspruch 10, **dadurch gekennzeichnet, dass** er in Form einer Verpackungsvorrichtung wie eines Topfs vorliegt.

12. Pflanzenzuchtträger nach Anspruch 10, **dadurch gekennzeichnet, dass** er in Form einer Mulchplatte vorliegt.

## Claims

1. Process for the production of a plant growth substrate, **characterised in that** it comprises:
- a step of homogeneous mixing (E2) of algae, of water and of a chosen vegetable filler, said mixture comprising from 1 to 8% of previously ground (E1.1) algae of the genus *Ulva,* from 2 to 5% of a vegetable filler chosen from lignocellulose fibres or a mixture composed substantially of lignocellulose fibres, from 0 to 3% of a plasticising and adhesive compound of vegetable origin, and from 90 to 95% of water,
- one or more steps of removal of the water contained in said mixture (E4, E4', E5, E6, E6'),
- a step of formation of said plant growth substrate by moulding of the mixture.

2. Production process according to claim 2, **characterised in that** said step of mixing (E2) comprises the addition of a plasticising and adhesive compound of vegetable origin chosen from starch, a compound derived from starch, potato starch or mixtures thereof.

3. Production process according to either claim 1 or claim 2, **characterised in that** said algae of the genus *Ulva* are chosen from the species *Ulva armoricana, Ulva rotundata, Ulva rigida* or a mixture thereof.

4. Production process according to any one of claims 1 to 3, **characterised in that** said mixture composed substantially of lignocellulose fibres is paper pulp or a mixture of wood barks and peat.

5. Production process according to any one of claims 1 to 4, **characterised in that** said plasticising and adhesive compound of vegetable origin chosen from starch, derivatives of starch, potato starch or a mixture thereof.

6. Production process according to any one of claims 1 to 5, **characterised in that** said step of mixing (E2) comprises the addition of linseed oil.

7. Production process according to any one of claims 1 to 6, **characterised in that** said step of removal of water is carried out by drying in air maintained at a temperature of from 80 to 150°C (E6).

8. Production process according to any one of claims 1 to 7, **characterised in that** it comprises, before the step of removal of water, a step of moulding (E3) of said mixture around a mould connected to a suction device and, after said step of removal of water, a step of demoulding of said material (E7).

9. Process for the production of a biodegradable material with agronomic utility according to claim 8, **characterised in that** said step of removal of water comprises, on the one hand, draining said mould around which said mixture is moulded (E5) by removing the water contained in said mould by suction by means of said water suction device (E4') and, on the other hand, either drying said mixture in air maintained at a temperature of from 80 to 150°C (E6) or disposing said mould in a counter-mould maintained at a temperature of from 80 to 150°C (E6').

10. Plant growth substrate obtained by a process according to any one of claims 1 to 9.

11. Plant growth substrate according to claim 10, **characterised in that** it is in the form of a packaging device, such as a pot.

12. Plant growth substrate according to claim 10, **characterised in that** it is in the form of a mulch panel.
